# EUROPEAN PATENT SPECIFICATION

(11) **EP 4 641 808 B1**
(45) Date of publication and mention of the grant of the patent: **02.09.2026**
(21) Application number: 24216854.0
(22) Date of filing: 02.12.2024
(51) Int. Cl.: H01M 50/474, H01M 10/04

(54) **CYLINDRICAL BATTERY AND BATTERY DEVICE**
ZYLINDRISCHE BATTERIE UND BATTERIEVORRICHTUNG
BATTERIE CYLINDRIQUE ET DISPOSITIF DE BATTERIE

(30) Priority: 24.04.2024 CN 202420869098 U
(43) Date of publication of application: 29.10.2025
(73) Proprietor: CALB Group Co., Ltd., Changzhou City, Jiangsu Province (CN)
(72) Inventor: LIU, Congyi, Changzhou City, Jiangsu Province (CN); QI, Binwei, Changzhou City, Jiangsu Province (CN); DU, Guoyi, Changzhou City, Jiangsu Province (CN)
(74) Representative: Becker, Eberhard

(56) References cited:
- EP-A1- 4 213 296
- EP-A2- 2 355 208
- WO-A1-2018/012528
- CN-U- 219 067 143

## Description

### Technical Field

The present disclosure relates to the technical field of batteries, and particularly relates to a cylindrical battery and a battery device.

### Background Art

In the existing design solution of cylindrical batteries, the cell includes a positive pole tab and a negative pole tab, and the positive pole tab and the negative pole tab are used for subsequent electrical connection. A separator is provided at the outermost side at an end of the cell not provided with the positive pole tab and the negative pole tab. The separator is soft in texture and has weak support for the cell, which affects the subsequent electrical connection between the positive pole tab and the negative pole tab. In addition, since the positive pole tab and the negative pole tab are led out on the same side, the housing is electrified in the design. In order to realize the insulation performance between the cell and the housing, an insulating member is arranged between them. However, the insulating member and the cell are prone to relative displacement, which affects the insulation effect, and even causes damage to the insulating member and the cell, resulting in insulation failure and affecting the life of the cell.

EP 2355208A2 discloses a battery according to the preamble of the appended claim 1.

### Summary of the Invention

One main object of the present disclosure is to overcome at least one defect of the above prior art, and provide a battery to solve the problems of soft texture of the separator, insufficient supporting force for the cell, and affecting the electrical connection between the positive pole tab and the negative pole tab.

In order to achieve the above purpose, the present disclosure adopts the following technical solution.

According to an aspect of the present disclosure, a cylindrical battery is provided, including a housing and a cell, wherein the cell is located inside the housing; the cell includes a roll core body, a positive pole tab and a negative pole tab; the roll core body has first ends and second ends which are opposite in an axial direction of the cylindrical battery; the positive pole tab and the negative pole tab are both located at the first end; an insulating member is provided between the second end and the housing; wherein the insulating member includes a body portion and a convex portion which is located on a side of the body portion facing towards the cell and extends towards the cell; the second end has a vacancy portion; and the convex portion is at least partially accommodated in the vacancy portion.

From the above technical solution, it can be seen that the advantages and positive effects of the cylindrical battery proposed by the present disclosure are as follows.

The cylindrical battery proposed by the present disclosure includes an insulating member disposed between the non-tab lead-out end of the cell and the housing, and the insulating member includes a body portion and a convex portion. The convex portion is located at a side of the body portion facing towards the cell and extends towards the cell. The non-tab lead-out end has a vacancy portion, and the convex portion is at least partially accommodated in the vacancy portion to realize the supporting effect of the insulating member on the cell. In addition, the limit function of the roll core body and the insulating member can also be realized in the radial direction. By the above structural design, the positive pole tab and the negative pole tab of the cylindrical battery are led out on the same side, and a separator is located at the outermost side of an end of the cell far away from the positive pole tab and the negative pole tab. The separator is soft in texture and has weak supporting force to the cell, which is easy to cause the cell to shake. By providing the convex portion on the insulating member to cooperate with the vacancy portion of the second end of the cell, the cell is supported by the insulating member to improve the stability of the cell, which then ensures the welding reliability of the subsequent positive pole tab and the negative pole tab and other structural parts. In addition, as the positive pole tab and the negative pole tab of the cylindrical battery are led out on the same side, and the housing is electrified, it is necessary to achieve insulation between the cell and the housing. The present disclosure can use the convex portion of the insulating member to achieve the effective limit of the insulating piece and the cell, avoid the relative displacement between the insulating member and the cell in the radial direction, ensure the insulation effect, and prolong the cell life.

Another main object of the present disclosure is to overcome at least one of the above-described defects of the prior art and provide a battery device using the above-described cylindrical battery.

In order to achieve the above purpose, the present disclosure adopts the following technical solution.

According to another aspect of the present disclosure, a battery device is provided, including the cylindrical battery according to the present disclosure.

From the above technical solution, it can be seen that the advantages and positive effects of the battery device proposed by the present disclosure are as follows.

The battery device proposed by the present disclosure can ensure the insulation effect of the cylindrical battery and prolong the life of the cell by adopting the cylindrical battery proposed by the present disclosure.

### Brief Description of the Drawings

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.In the drawings,
Fig. 1 is a structurally perspective view showing a cylindrical battery according to an exemplary embodiment;
Fig. 2 is an exploded perspective view of a cell and an insulating member;
Fig. 3 is a partial axial cross-sectional view of a combined structure of a cell, an insulating member, and a housing in an embodiment shown in Fig. 2;
Fig. 4 is a exploded perspective view of a cell and an insulating member of a cylindrical battery according to another exemplary embodiment;
Fig. 5 is a structurally perspective view showing an insulating member of a cylindrical battery according to another exemplary embodiment;
Fig. 6 is a partial axial cross-sectional view of a combined structure of a cell, an insulating member, and a housing in an embodiment shown in Fig. 5;
Fig. 7 is a partial axial cross-sectional view of a combined structure of a cell, an insulating member, and a housing according to another exemplary embodiment;
Fig. 8 is a structurally perspective view showing an insulating member of a cylindrical battery according to another exemplary embodiment.

### Description of Reference Numerals:

100, housing;
111, protrusion;
200, roll core body;
210, roll core hole;
220, second end;
300, insulating member;
310, body portion;
320, convex portion;
321, through hole;
322, shielding portion;
330, first adhesive layer;
340, second adhesive layer;
400, insulating layer;
410, folded edge;
H1, height;
H2, thickness;
H3, height;
H4, length;
X, axial direction.

### Detailed Description of the Invention

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

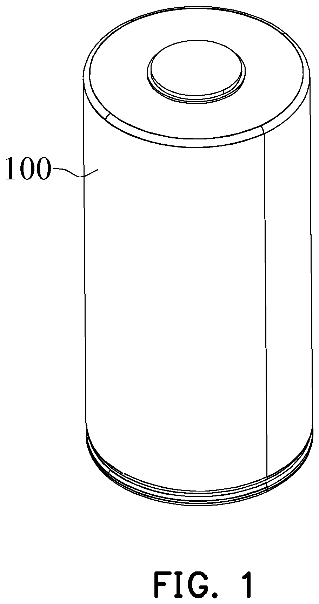

Referring to Fig. 1, there is representatively shown a schematic perspective view of a cylindrical battery according to the present disclosure. In this exemplary embodiment, the cylindrical battery proposed by the present disclosure is described by taking a battery device applied to a vehicle as an example. It will be readily understood by those skilled in the art that in order to apply the relevant design of the present disclosure to other types of battery devices, various modifications, additions, substitutions, deletions or other changes to the following specific embodiments are still within the scope of the principles of the cylindrical battery proposed by the present disclosure.

It should be noted that the battery device proposed in the present disclosure may be used in various electrical devices, such as mobile phones, portable devices, notebook computers, various vehicles (such as battery carts, electric vehicles, and the like), ships, spacecrafts, electric toys, and electric tools, and the like. Further, the aforementioned spacecraft may include, for example, an airplane, a rocket, a space shuttle, a spacecraft, and the like. The above-described electric toys may include, for example, stationary or mobile electric toys (for example, gaming machines, electric vehicle toys, electric ship toys, electric airplane toys, and the like). The above-described electric tool may include, for example, a metal cutting electric tool, a grinding electric tool, an assembly electric tool, and a railway electric tool, and specifically, for example, an electric drill, an electric grinder, an electric wrench, an electric screwdriver, an electric hammer, an impact electric drill, a concrete vibrator, and an electric planer. It should be understood that in various possible embodiments consistent with the design concept of the present disclosure, the cylindrical battery or battery device proposed by the present disclosure is not only limited to the above-described devices, but also can be applied to all devices using batteries. For the sake of simplicity of description, each embodiment in the present description will be described with reference to a vehicle as an example.

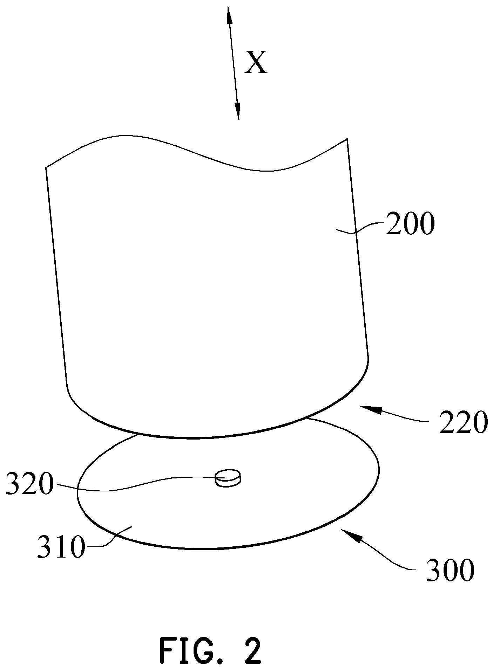

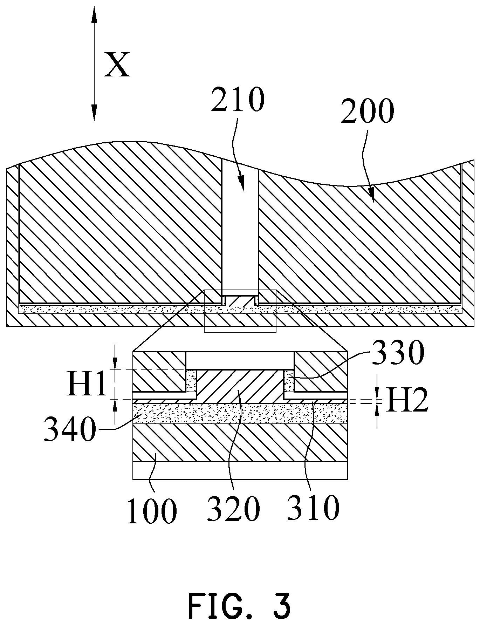

As shown in Fig. 1, in an embodiment of the present disclosure, the cylindrical battery according to the present disclosure includes a housing 100 and a cell. Referring in conjunction with Figs. 2 and 3, Fig. 2 representatively shows a perspective exploded view of the cell and the insulating member 300. Fig. 3 representatively shows a partial axial cross-sectional view of the combined structure of the cell, the insulating member 300, and the housing 100. Hereinafter, the structure, connection mode and functional relationship of each main component of the cylindrical battery proposed by the present disclosure will be described in detail in conjunction with the above drawings.

As shown in Figs. 1 to 3, in an embodiment of the present disclosure, the cell is located inside the housing 100, and the cell includes a roll core body 200, a positive pole tab, and a negative pole tab. The roll core body 200 has opposite first end and second end 220 in a axial direction X of the cylindrical battery, and both the positive pole tab and the negative pole tab are located at the first end of the roll core body 200. That is, the first end is the tab lead-out side of the cell, and the second end 220 is the non-tab lead-out side of the cell. An insulating member 300 is disposed between the second end 220 of the roll core body 200 and the housing 100_{∘} The insulating member 300 can provide an insulating function between the second end 220 of the roll core body 200 and the housing 100 at a corresponding position. In addition, the insulating member 300 includes a body portion 310 and a convex portion 320 which is located on a side of the body portion 310 facing towards the cell and extends towards the cell. The second end 220 of the roll core body 200 has a vacancy portion, and the convex portion 320 is at least partially accommodated in the vacancy portion. Accordingly, the cylindrical battery is adapted to restrict the relative position of the roll core body 200 and the insulating member 300 in the radial direction of the cylindrical battery via the cooperation of the convex portion 320 and the vacancy portion. By the above structural design, the positive pole tab and the negative pole tab of the cylindrical battery are led out on the same side, and a separator is located at the outermost side of an end of the cell far away from the positive pole tab and the negative pole tab. The separator is soft in texture and has weak supporting force to the cell, which is easy to cause the cell to shake. By providing the convex portion on the insulating member to cooperate with the vacancy portion of the second end of the cell, the cell is supported by the insulating member to improve the stability of the cell, which then ensures the welding reliability of the subsequent positive pole tab and the negative pole tab and other structural parts. In addition, as the positive pole tab and the negative pole tab of the cylindrical battery are led out on the same side, and the housing 100 is electrified, it is necessary to achieve insulation between the cell and the housing 100. By the cooperation of the convex portion 320 and the vacancy portion, it achieves effective limit between the insulating member 300 and the cell to avoid relative displacement between the insulating member 300 and the cell in the radial direction, ensures the insulation effect, and prolongs the cell life.

As shown in Fig. 3, in an embodiment of the present disclosure, the roll core body 200 includes a roll core hole 210 penetrating along the axial direction X, and a portion of the roll core hole 210 forms the above-described vacancy portion. In other words, the convex portion 320 of the insulating member 300 is at least partially accommodated in the passage of the roll core hole 210. By the above structural design, the present disclosure can use the convex portion 320 to support the roll core hole 210, and avoid the roll core hole 210 from being deformed during the processing process of the cylindrical battery (such as the liquid injection process or the charge and discharge expansion process). Note that, when the vacancy portion is formed by a portion of the roll core hole 210, the vacancy portion is actually a partial passage of the roll core hole 210. In some embodiments, the vacancy portion may be formed by another structure of the cell. For example, the vacancy portion may be an adjacent separator of the roll core body 200 or a gap between an adjacent separator and a pole plate, and is not limited to the present embodiment. The roll core hole is usually located at the center of the cell, and the roll core hole 210 is supported by the convex portion 320, so that the end face of the cell receives a more uniform supporting force, and the stability of the cell is improved.

As shown in Fig. 3, in an embodiment of the present disclosure, the height H1 of the convex portion 320 may be 0.1 mm-3 mm along the axial direction X of the cylindrical battery, for example, 0.1 mm, 0.5 mm, 1 mm, 2 mm, 3 mm, or the like. By the above structural design, the present disclosure may avoid the height H1 of the convex portion 320 being too small to make the supporting effect on the cell insufficient and the limiting function on the cell not obvious enough. Meanwhile, it can avoid the height H1 of the convex portion 320 being too large to make the convex portion 320 easily damage the active material region of the pole plate. Further, when the vacancy portion is formed by a portion of the roll core hole 210, the present disclosure adopts the design of the suitable height H1 described above, so that the convex portion 320 can avoid the position deformation of the roll core hole 210 caused by the liquid injection process via the roll core hole 210 or the battery charge and discharge over-expansion process. In some embodiments, the height H1 of the convex portion 320 may be less than 0.1 mm, or may be greater than 3 mm, such as 0.095 mm, 3.05 mm, etc., and is not limited to the present embodiment.

As shown in Fig. 3, in an embodiment of the present disclosure, there is a gap between the convex portion 320 and the vacancy portion in the radial direction of the cylindrical battery. The width of the gap may be 0.05 mm-4 mm, for example, 0.05 mm, 0.1 mm, 0.5 mm, 1 mm, 2 mm, 4 mm, or the like. In the case where the cross section of the convex portion 320 is circular and the vacancy portion is formed by the roll core hole 210 having a circular hole, the width of the gap is one-half of the difference between the inner diameter of the vacancy portion (for example, the hole diameter of the roll core hole 210) and the outer diameter of the convex portion 320. By the above structural design, the present disclosure can avoid the width of the gap between the convex portion 320 and the vacancy portion being too large, so that the insulating member 300 is easily displaced. Meanwhile, it can avoid the width of the gap being too small, so that the convex portion 320 is easy to squeeze the pole plate, causing the material drop of the pole plate and the separator or pole plate damage. In addition, the maintaining a certain gap between the convex portion 320 and the vacancy portion can also facilitate assembly. Further, when the vacancy portion is formed by a portion of the roll core hole 210, a separator is provided at the position of the roll core hole 210, and a pole plate active material layer is disposed outside the separator. If the convex portion 320 is too close to the hole wall position of the roll core hole 210, the separator will be squeezed, resulting in an increase in the risk of pole plate material dropping. In some embodiments, the width of the gap may be less than 0.05 mm, or may be more than 4 mm, for example, 0.049 mm, 4.05 mm, etc., and is not limited to the present embodiment.

As shown in Fig. 3, in an embodiment of the present disclosure, the thickness H2 of the body portion 310 may be 0.03 mm-0.5 mm along the axial direction X of the cylindrical battery, for example, 0.03 mm, 0.05 mm, 0.1 mm, 0.2 mm, 0.5 mm, or the like. By the above-described structural design, the present disclosure can avoid the excessive occupation of the internal space of the housing 100 caused by the excessive thickness H2 of the main body portion 310. Meanwhile, it can avoid the insufficient support force of the cell due to the too small thickness H2 of the main body portion 310. Also, it will avoid affecting the insulation effect. In some embodiments, the thickness H2 of the body portion 310 may be less than 0.03 mm, or may be greater than 0.5 mm, for example, 0.029 mm, 0.51 mm, etc., and is not limited to the present embodiment.

In an embodiment of the present disclosure, the ratio of the surface area of the side of the body portion 310 facing towards the cell to the end face area of the second end 220 may be 1 : 2-3 : 2, for example, 1 : 2, 2 : 3, 3 : 4, 1 : 1, 5 : 4, 3 : 2, or the like. By the above structural design, the present disclosure can avoid the insufficient support force for the cell caused by the small area of the main body portion 310 and the increased risk of short circuit between the cell and the housing 100. Meanwhile, it can avoid the large area of the main body portion 310, which increases the weight of the insulating member and affects the heat dissipation of the cell. In some embodiments, the ratio of the surface area of the side of the body portion 310 facing towards the cell to the end face area of the second end 220 may be less than 1 : 2, or may be greater than 3 : 2, for example, 9 : 20, 31 : 20, etc., and is not limited to the present embodiment.

In an embodiment of the present disclosure, a reference plane is defined, and the reference plane is parallel to a surface of a side of the body portion 310 facing towards the cell. Both the orthographic projection pattern of the body portion 310 and the orthographic projection pattern of the convex portion 320 may be circular on the reference plane. The center of the corresponding circle of the orthographic projection pattern of the body portion 310 coincides with the center of the corresponding circle of the orthographic projection pattern of the convex portion 320. By the above structural design, the present disclosure can match the convex portion 320 with the current of the roll core hole 210 with a circular cross section, facilitate the matching of the convex portion 320 and the roll core hole 210, and improve the positioning accuracy between the insulating member 300 and the cell. In some embodiments, the orthographic projection pattern of the convex portion 320 on the reference plane may have another shape, such as a polygon, an ellipse, or the like. The orthographic projection pattern of the body portion 310 and the convex portion 320 are not limited to the same shape. The geometric center of the orthographic projection pattern of the body portion 310 and the geometric center of the orthographic projection pattern of the convex portion 320 may preferably overlap with each other, and is not limited to the present embodiment. The geometric center refers to the centermost position of the orthographic projection pattern of the body portion 310 or the convex portion 320, for example, a center of a circle, a center of a corresponding circle of a regular polygon, an intersection point of two diagonals of a parallelogram, or the like.

Based on the structural design in which the orthographic projection pattern of the convex portion 320 is circular, in an embodiment of the present disclosure, the outer diameter of one end of the convex portion 320 connected to the body portion 310 may be greater than the outer diameter of an end of the convex portion 320 away from the body portion 310. For example, the shaft side cross section of the convex portion 320 may be substantially trapezoidal. By the above structural design, the present disclosure can use the side of the convex portion 320 to provide a guiding effect, so that the convex portion 320 more easily enter into the vacancy portion, and further facilitates the assembly of the insulating member 300. In some embodiments (for example, the embodiment shown in Fig. 3), the outer diameter of an end of the convex portion 320 connected to the body portion 310 may be equal to the outer diameter of one end of the convex portion 320 away from the body portion 310, and the present embodiment is not limited to the present embodiment. In the present embodiment, the orthographic projection patterns of both ends of the convex portion 320 are circular in the first direction. However, in some embodiments, the orthographic projection patterns of both ends of the convex portion 320 may have other shapes and are not limited to the same shape. In this case, the width of one end of the convex portion 320 connected to the body portion 310 may be greater than the width of the other end. The width may be, for example, an outer diameter of a circle, a long axis length of an ellipse, an outer diameter of a corresponding circle of a regular polygon, or a length of the longer one of two diagonals of a parallelogram.

In an embodiment of the present disclosure, the roll core body 200 includes a separator, and the ratio of the hardness of the insulating member 300 to the overhang of the separator may be 2-110, for example, 2, 5, 10, 20, 50, 100, 110, etc. Here, the overhang of the separator refers to a width in which the edge of the separator exceeds the edge of the negative plate in the length and/or width direction. By the above structural design, the present disclosure comprehensive design of the relationship between the hardness of the insulating member 300 and the overhang of the separator. By making the insulating member 300 have a certain hardness, it plays the role of supporting the vacancy, so that the separator will not be affected by the liquid injection by negative pressure sucked up during the liquid injection. Also, the separator overhang size can be larger to ensure the insulation between the positive and negative pole plates. In particular, when the vacancy portion is formed at the position of the roll core hole 210, the convex portion 320 is partially accommodated in the roll core hole 210, which plays a role of sufficiently supporting the roll core hole 210, so as to avoid the roll core hole 210 being easily crushed and deformed during the expansion process of the cell or the liquid injection process.

In an embodiment of the present disclosure, the hardness of the insulating member 300 may be 10 HV to 100 HV, for example, 10 HV, 20 HV, 50 HV, 100 HV, or the like. Here, the method of measuring the hardness of the insulating member 300 can refer to the national standard GB/T 4340.1-2009. By the above-mentioned design, the present disclosure can avoid that the hardness of the insulating member 300 is too small and it is difficult to play a supporting role for the roll core hole 210, resulting in the roll core hole 210 being easily crushed and deformed during the expansion process of the cell or the liquid injection process. Meanwhile, it will also avoid poor support for the cell due to too low hardness. Also, the present disclosure can avoid the hardness of the insulating member 300 being too large, because the raised part 320 is in direct contact with the inner layer separator of the roll core body 200. When the hardness of the insulating member 300 is too large, it will be easier to cause the separator damage, thus leading to the exposure of the pole plate and increasing the risk of short circuit. In some embodiments, the hardness of the insulating member 300 may be less than 10 HV, or may be greater than 100 HV, such as 9.5 HV, 101 HV, etc., and is not limited to the present embodiment.

In an embodiment of the present disclosure, the overhang of the separator may be 1 mm-4 mm, for example, 1 mm, 2 mm, 3 mm, 4 mm, or the like. By the above-described structural design, since the insulating member 300 adopts the above-described preferred design, it is ensured that the insulating member 300 has sufficient hardness, and thus it is possible to realize the structural design in which the separator is larger overhang, thereby ensuring the insulating performance between the positive plate and the negative plate. Further, when the convex portion 320 is at least partially accommodated in the roll core hole 210, since the insulating member 300 has a large hardness, the convex portion 320 of the insulating member 300 may sufficiently support the roll core hole 210. Even if the size of the separator is relatively large, the liquid injection channel will not be blocked due to the separator being pulled out due to negative pressure adsorption during the liquid injection process. In addition, by designing the overhang of the separator to a suitable range in the the present disclosure, the insulation of the positive and negative plates can be sufficiently ensured by the separator.

In an embodiment of the present disclosure, the surface roughness Rz of the insulating member 300 may be less than or equal to 0.3, for example, 0.1, 0.15, 0.2, 0.3, or the like. Among them, the measurement method of the surface roughness Rz of the insulating member 300 may refer to the national standard GB/T 3505-2000. By the above-mentioned design, the present disclosure can avoid the surface roughness Rz of the insulating member 300 being too large, which leads to easy scratching of the separator. In addition, the surface roughness Rz is more sensitive to the characterization of abnormal conditions such as burrs than the surface roughness Ra, and thus has more reference value for the selection of surface processing parameters of the insulating member 300. In some embodiments, the surface roughness Rz of the insulating member 300 may be greater than 0.3, for example, 0.31 or the like, and is not limited to the present embodiment.

In an embodiment of the present disclosure, the thermal conductivity of the insulating member 300 may be 0.01 W/(m·k)-5 W/(m·k), for example, 0.01 W/(m·k), 0.1 W/(m·k), 0.5 W/(m·k), 1 W/(m·k), 2 W/(m·k), 5 W/(m·k), or the like. Among them, the method of measuring the thermal conductivity of the insulating member 300 may refer to the national standard GB/T 10297-2015. By the above-mentioned design, the present disclosure can control the thermal conductivity of the insulating member 300 in a lower range. According to this, because the housing 100 is charged, the cylindrical battery in the process of charging and discharging the housing 100 has more higher. It can use the insulating member 300 to play a heat insulation role in the present disclosure, avoid the heat of the housing 100 transferred too much to the separator of the roll core body 200, and avoid the separator being heated and easily shrinked to cause the exposed pole plate problem, so as to reduce the risk of short circuit. Meanwhile, the present disclosure can avoid the problem that the cell cannot dissipate heat by the housing 100 due to the low thermal conductivity of the insulating member 300. In some embodiments, the thermal conductivity of the insulating member 300 may be greater than 5 W/(m·k), for example, 5.01 W/(m·k), and is not limited to the present embodiment.

In an embodiment of the present disclosure, the insulating member 300 is fixedly connected to at least one of the roll core body 200 and the housing 100. For example, the insulating member 300 may be fixedly connected to the roll core body 200 and may not be fixedly connected to the housing 100. As another example, the insulating member 300 may be fixedly connected to the housing 100 and has no fixed connection relationship with the roll core body 200. For another example, the insulating member 300 may be fixedly connected to the housing 100 and the roll core body 200, respectively. Further, a fixed connection method between the insulating member 300 and at least one of the roll core body 200 and the housing 100 may be, for example, welding, hot melt fixing, adhesion, or the like. By the above-described structural design, the present disclosure can ensure that the position of the insulating member 300 is relatively fixed, and the insulation effect between the cell and the housing 100 is guaranteed.

In some embodiments of the present disclosure, the insulating member 300 and the housing 100 may also adopt an integral molding design. The so-called integral molding can be understood as the insulating member 300 integrated on the housing 100 when the housing 100 is fed. By the above-described structural design, the present disclosure can directly ensure the center of the housing 100 and the center of the insulating member 300 concentrically arranged by using an integrated molding method, without additional positioning, reducing the assembly process, improving the production efficiency, which is conducive to the matching positioning of the center of the housing 100 and the cell, and has high positioning accuracy.

In some embodiments of the present disclosure, when the insulating member 300 and the housing 100 are integrally molded. The thickness H2 of the body portion 310 may be 0.05 mm-0.5 mm along the axial direction X of the cylindrical battery, for example, 0.05 mm, 0.07 mm, 0.1 mm, 0.2 mm, 0.5 mm, etc. According to the above-described configuration design, since the gap between the housing 100 and the insulating member 300 is small when the insulating member 300 and the housing 100 are integrally molded, the thickness H2 of the body portion 310 is further limited not to 0.05 mm at this time, and the problem of poor electrolyte wetting effect can be avoided. Moreover, since the insulating member 300 and the housing 100 are integrally molded and arranged, the gap between the insulating member 300 and the housing 100 is often relatively small, and then the creepage distance between the cell and the housing 100 becomes smaller. The present disclosure designs the body portion 310 of the insulating member 300 to a certain thickness, which can reduce the risk of insulation between the cell and the housing 100. Meanwhile, the body portion 310 of the insulating member 300 should not be too thick. Since the electrolyte is temporarily stored at the bottom of the housing 100 after the electrolyte is injected, and it will affect the subsequent electrolyte wetting of the pole plate if the body portion 310 is too thick.

As shown in Fig. 3, based on the structural design in which the insulating member 300 and the roll core body 200 are fixedly connected. In an embodiment of the present disclosure, a partial area of the convex portion 320 may be connected to the roll core body 200 via the first adhesive layer 330. That is, the insulating member 300 is fixed to the roll core body 200 in the connection mode of bonding. In some embodiments, the side of the body portion 310 close to the cell may also be bonded to the roll core body 200.

As shown in Fig. 3, based on the structural design in which the insulating member 300 and the housing 100 are fixedly connected, in an embodiment of the present disclosure, the surface of the side of the body portion 310 facing away from the cell may be connected to the housing 100 via the second adhesive layer 340. That is, the insulating member 300 is fixed to the housing 100 in the connection mode of bonding.

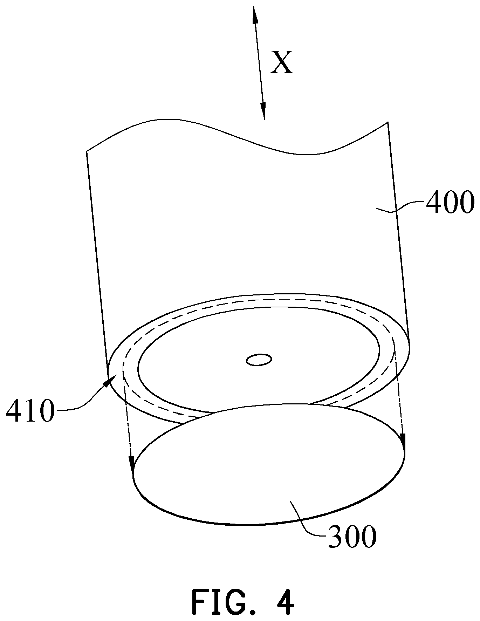

Referring to Fig. 4, Fig. 4 representatively shows a three-dimensional exploded schematic view of a cell and an insulating member 300 in another exemplary embodiment of a cylindrical battery according to the principles of the present disclosure.

As shown in Fig. 4, in an embodiment of the present disclosure, the cell may further include an insulating layer 400 disposed on a side of the cell (for example, a cylindrical surface of the cell). On this basis, the edge of the insulating layer 400 adjacent to the second end 220 of the roll core body 200 may have a folded edge 410 covering a portion of the end face of the second end 220. However, in Fig. 4, the portion of the insulating layer 400 is shown by a dot-like fill pattern in order to facilitate observation and understanding. By the above-described structural design, the present disclosure can improve the insulation effect between the cell and the housing 100 by using the insulating layer 400.

As shown in Fig. 4, based on the structural design in which the cell includes the insulating layer 400 and the insulating layer 400 has the folded edge 410, in an embodiment of the present disclosure, a reference plane is defined parallel to a surface of a side of the body portion 310 facing towards the cell. The orthographic projection pattern of the insulating member 300 partially overlaps with the orthographic projection pattern of the insulating layer 400 on the reference plane. Among them, in order to facilitate observation and understanding, in Fig. 4, the insulating member 300 is separated away from the cell in the circumferential direction. A dotted line is marked on the folded edge 410, and the dotted line indicates the edge position of the insulating member 300 and the cell when they are installed, so as to cooperate with understanding the overlapping relationship between the insulating member 300 and the insulating layer 400 (folded edge 410). By the above-described structural design, the present disclosure can further ensure the insulation effect at the overlap of the insulating member 300 and the insulating layer 400, and avoid the existence of a gap between the insulating member 300 and the folded edge 410 to affect the insulation performance.

Based on the structural design in which the insulating member 300 and the insulating layer 400 (the folded edge 410) partially overlap with each other, in an embodiment of the present disclosure, the insulating member 300 and the insulating layer 400 can be fixedly connected. For example, the edge of the body portion 310 of the insulating member 300 is fixedly connected with the folded edge 410. By the above-described structural design, the present disclosure can realize the fixation of the insulating member 300 by using the insulating layer 400. It avoids bonding between the insulating member and the cell and damaging the cell.

Based on the structural design in which the insulating member 300 and the insulating layer 400 (the folded edge 410) partially overlap with each other, in an embodiment of the present disclosure, the length of the overlapping portion of the orthographic projection pattern of the insulating member 300 and the insulating layer 400 may be less than or equal to 15 mm, such as 1 mm, 2 mm, 5 mm, 10 mm, 15 mm, etc., on any straight path parallel to the radial direction on the above reference plane. The length of the overlapping portion may be understood as the width of the annular shape defined between the annular dotted line and the annular solid line indicating the inner ring edge of the folded edge 410 in Fig. 4. By the above-described structural design, the present disclosure can avoid the overlapping region of the insulating member 300 and the insulating layer 400 being too large and occupying the housing space. In addition, when the overlapping region is too large, the size of the folded edge 410 of the insulating layer 400 is large, which will lead to an increase in the risk of wrinkles of the insulating layer 400, resulting in poor end face flatness of the second end of the cylindrical battery. In some embodiments, the length of the overlapping portion of the orthographic projection pattern between the insulating member 300 and the insulating layer 400 may be greater than 15 mm, for example, 15.1 mm, and the present embodiment is not limited to the present embodiment.

Based on the structural design in which the cell includes the insulating layer 400, in an embodiment of the present disclosure, the insulating layer 400 may be an insulating film. In some embodiments, the insulating layer 400 may be arranged in other ways. For example, the insulating layer 400 may be an insulating coating formed by spraying, and is not limited to this embodiment.

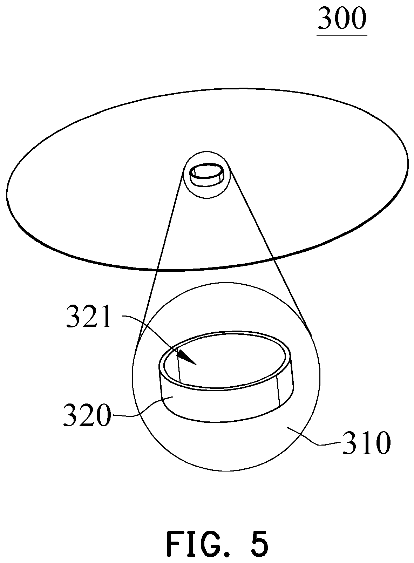

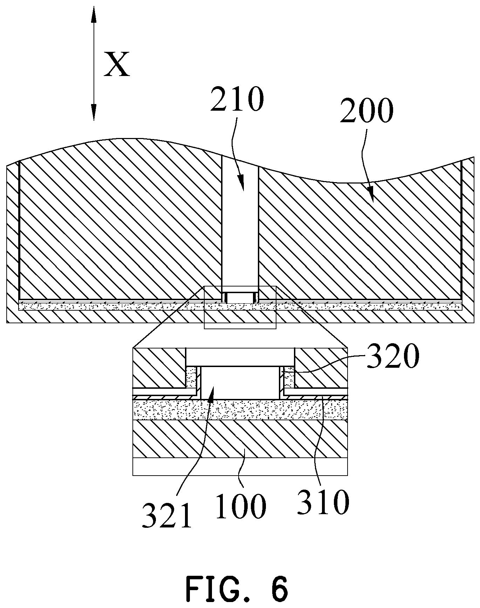

Referring to Figs. 5 and 6, Fig. 5 representatively shows a three-dimensional structural schematic diagram of an insulating member 300 in another exemplary embodiment of a cylindrical battery according to the principles of the present disclosure. Fig. 6 representatively shows a partial axial cross-sectional view of the combined structure of the cell, the insulating member 300, and the housing 100.

As shown in Figs. 5 and 6, in an embodiment of the present disclosure, the cylindrical battery proposed by the present disclosure includes a liquid injection hole structure which is disposed on the side of the housing 100 close to the insulating member 300. On this basis, the convex portion 320 of the insulating member 300 may be provided with a through hole 321 which penetrates through the insulating member 300 along the axial direction X. The passage of the liquid injection hole structure and the through hole 321 at least partially overlap with each other. By the above-described structural design, the present disclosure can facilitate the liquid injection operation of the cylindrical battery, avoid the separator blocking the roll core hole 210 or the liquid injection hole, and ensure the liquid injection effect. Among them, the liquid injection hole of the cylindrical battery and the roll core hole 210 of the cell are opposite to each other. During the liquid injection process, negative pressure will be generated, causing the separator of the cell to be easily withdrawn, resulting in the problem of the separator to block the roll core hole 210 or the liquid injection hole, which affects the battery liquid injection. In this regard, the present disclosure can use the design that the convex portion 320 is located at the position of the roll core hole 210 to play the role of supporting the roll core hole 210 and ensure the liquid injection efficiency.

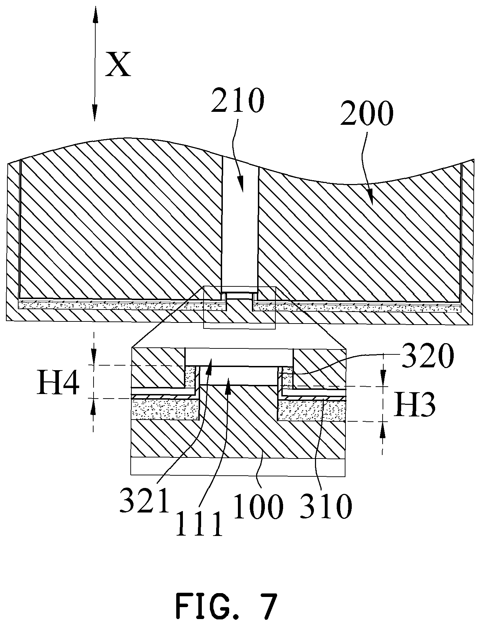

Referring to Fig. 7, it representatively shows a partial axial side cross-sectional view of a combined structure of a cell, an insulating member 300, and a housing 100 in another exemplary embodiment of a cylindrical battery according to the principles of the present disclosure.

As shown in Fig. 7, still taking the structural design in which the housing 100 is provided with a liquid injection hole structure and the convex portion 320 is provided with a through hole 321 as an example, in an embodiment of the present disclosure, the liquid injection hole structure includes a protrusion 111 extending towards the cell, and the protrusion 111 is at least partially accommodated in the through hole 321. For example, a passage of the liquid injection hole structure may be located in the protrusion 111. In addition, the ratio of the length H4 of the through hole 321 to the height H3 of the protrusion 111 along the axial direction X of the cylindrical battery may be 1 : 3-3 : 2, for example, 1: 3, 1 : 2, 2 : 3, 3 : 4, 1 : 1, 5 : 4, 3 : 2, or the like. However, since the through hole 321 penetrates through the convex portion 320 in the axial direction X and also penetrates through the body portion 310, the length H4 of the through hole 321 can be understood as the sum of the thickness of the body portion 310 and the height of the convex portion 320. By the above-described structural design, the present disclosure can avoid the above-mentioned ratio too small to affect the insulation performance between the liquid injection hole structure and the cell. Meanwhile, it can avoid the above-mentioned ratio too large to increase the assembly difficulty. In some embodiments, the ratio of the length H4 of the through hole 321 to the height H3 of the protrusion 111 may be less than 1 : 3, or may be greater than 3 : 2, for example, 2 : 9, 14 : 9, etc., and is not limited to the present embodiment.

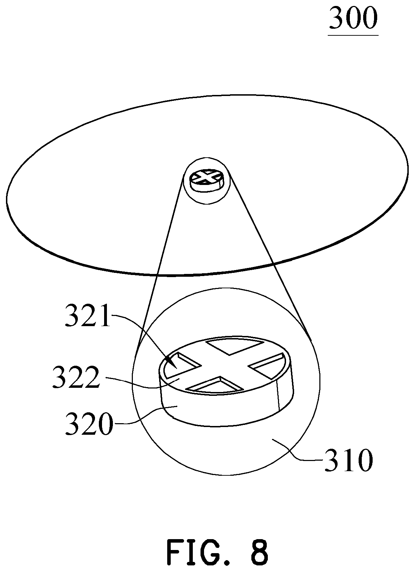

Referring to Fig. 8, it representatively shows a three-dimensional structural schematic diagram of an insulating member 300 in another exemplary embodiment of a cylindrical battery in accordance with the principles of the present disclosure.

As shown in Fig. 8, still taking the structural design in which the convex portion 320 is provided with the through hole 321 as an example, in an embodiment of the present disclosure, the convex portion 320 may also be provided with a shielding portion 322 which is located at an opening of the through hole 321 at a side close to the cell. The shielding portion 322 is adapted to divide the opening into at least two through regions. For example, since the shielding portion 322 shown in Fig. 8 has a substantially "cross" shape (a Chinese character " 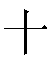 "), by which the opening at the side of the through hole 321 close to the cell can be divided into four through regions. By the above-described structural design in the present disclosure, the shielding portion 322 can be used to disperse the flow path of the electrolyte in the liquid injection process, avoid the excessive impact force generated when the electrolyte is injected directly washing the pole plate to causes the pole plate damage. In addition, the shielding portion 322 can also strengthen the structural strength of the convex portion 320. In some embodiments, the shielding portion 322 may have other shapes, such as, but not limited to, a shape looks like a Romanic number "1" lying sideway (a Chinese character " 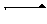 "), and is not limited to the present embodiment.

Based on the structural design in which the convex portion 320 is provided with the shielding portion 322, in an embodiment of the present disclosure, a reference plane is defined parallel to a surface of a side of the body portion 310 facing towards the cell. The ratio of the area of the orthographic projection pattern of the shielding portion 322 to the sum of the projected areas of all the through regions on the reference plane may be 1 : 10-1 : 2, for example, 1 : 10, 1 : 8, 1 : 5, 1 : 3, 1 : 2, etc. By the above-described structural design, the present disclosure can avoid that the shielding portion 322 is too large and excessively affects the liquid injection efficiency. Meanwhile, it can avoid that the shielding portion 322 is too small and the effect of strengthening the structural strength of the convex portion 320 is not obvious enough. In some embodiments, the ratio of the area of the orthographic projection pattern of the shielding portion 322 to the sum of the projected areas of all the through regions may be less than 1 : 10, or may be greater than 1 : 2, for example, 1 : 11, 6 : 11, etc., and is not limited to the present embodiment.

In an embodiment of the present disclosure, an electrode lead-out portion is provided on a side of the housing 100 close to the first end of the roll core body 200. One of the positive pole tab and the negative pole tab of the cell is connected to the electrode lead-out portion, and the other of the positive pole tab and the negative pole tab is connected to the housing 100.

Based on the structural design in which the housing 100 is provided with the electrode lead-out portion, in an embodiment of the present disclosure, a pressure relief portion may be further disposed on a side of the housing 100 close to the second end of the roll core body 200. The pressure relief portion is located on a side opposite to the electrode lead-out portion in the radial direction. By the above-described structural design in the present disclosure, it can realize electrothermal separation, that is, realize the separation of the electrical connection path of the cylindrical battery and the heat dissipation channel, and avoid the influence of heat dissipation on the electrical connection. In addition, when the insulating member 300 is provided with the through hole 321, the insulating member 300 can further improve its own heat dissipation effect on the cell by using the through hole, which is beneficial to quickly transfer heat generated inside the cell to the pressure relief portion of the housing 100, and facilitates heat dissipation when thermal runaway occurs in the cylindrical battery.

Based on the structural design in which the housing 100 is provided with the electrode lead-out portion, in an embodiment of the present disclosure, one of the positive pole tab and the negative pole tab is connected to the electrode lead-out portion via one collector member, and the other of the positive pole tab and the negative pole tab is connected to the housing 100 via the other collector member.

It should be noted here that the cylindrical batteries shown in the accompanying drawings and described in this description are only a few examples of many types of cylindrical batteries that can employ the principles of the present disclosure. It should be clearly understood that the principles of the present disclosure are by no means limited to any detail or any component of the cylindrical battery shown in the drawings or described in this description.

To sum up, the cylindrical battery proposed by the present disclosure includes an insulating member 300 disposed between the non-tab lead-out end of the cell and the housing 100. The insulating member 300 includes a body portion 310 and a convex portion 320. The convex portion 320 is located on the side of the body portion 310 facing towards the cell and extends towards the cell. The non-tab lead-out end has a vacancy portion. The convex portion 320 is at least partially accommodated in the vacancy portion. The outermost part of the positive tab and the negative tab of the cylindrical battery is lead out on the same side. The separator is located at an outermost side of the non-tab lead-out end of the cell. The separator texture is soft, having weak supporting force for the cell. By using the cooperation between the convex portion of the insulating member and the vacancy portion of the second end of the cell, it enables the insulating member to sufficiently support the cell, ensuring the stability of the cell, and improving the reliability of subsequent welding of the positive pole tab and the negative pole tab with other structural parts, thereby improving the electric connection effect of the positive pole tab and the negative pole tab. In addition, because the positive pole tab and the negative pole tab of the cylindrical battery are led out on the same side and the housing 100 is electrified, the insulation is required between the cell and the housing 100. Also, in the present disclosure, the convex portion 320 of the insulating member 300 can be used to realize the effective limit of the insulating member 300 and the cell, avoid the relative displacement between the insulating member 300 and the cell in the radial direction, ensure the insulation effect, and prolong the cell life.

Based on the above-described detailed description of several exemplary embodiments of the cylindrical battery proposed by the present disclosure, an exemplary embodiment of the battery device proposed by the present disclosure will be described below.

In an embodiment of the present disclosure, the battery device according to the present disclosure includes a cylindrical battery according to the present disclosure and described in detail in the above embodiment.

To sum up, the battery device proposed by the present disclosure can ensure the insulation effect of the cylindrical battery and prolong the life of the cell by adopting the cylindrical battery proposed by the present disclosure.

Exemplary embodiments of cylindrical batteries and battery devices proposed by the present disclosure have been described and/or illustrated in detail above. However, the embodiments of the present disclosure are not limited to the particular embodiments described herein. Rather, the components and/or steps of each embodiment may be used independently and separately from the other components and/or steps described herein. Each component and/or each step of one embodiment may also be used in conjunction with other components and/or steps of other embodiments. In introducing elements/components/etc. described and/or illustrated herein, the terms "a," "an," and "the above-mentioned", etc., are used to indicate that one or more elements/components/etc. are present. The terms "comprising", "including", and "having" are used in an open-ended inclusive sense and mean that there may be additional elements/components/etc. in addition to the listed elements/components/etc. In addition, the terms "first" and "second" in the claims and the description are used only as labels, and are not intended to be numerical limitations on their objects.

## Claims

1. A cylindrical battery comprising a housing (100) and a cell,
wherein the cell is located inside the housing (100); the cell comprises a roll core body (200), a positive pole tab and a negative pole tab; the roll core body (200) has first ends and second ends (220) which are opposite in an axial direction (X) of the cylindrical battery; the positive pole tab and the negative pole tab are both located at the first end; charaterized in that an insulating member (300) is provided between the second end (220) and the housing (100); wherein the insulating member (300) comprises a body portion (310) and a convex portion (320) which is located on a side of the body portion (310) facing towards the cell and extends towards the cell; the second end (220) has a vacancy portion; and the convex portion (320) is at least partially accommodated in the vacancy portion.

2. The cylindrical battery according to claim 1, **characterized in that** the roll core body (200) has a roll core hole (210) penetrating in the axial direction (X); a portion of the roll core hole (210) forms the vacancy portion; and the convex portion (320) is at least partially accommodated in the roll core hole (210).

3. The cylindrical battery according to claim 1 or 2, **characterized in that**
a height (H1) of the convex portion (320) in the axial direction (X) is 0.1 mm-3 mm; and/or
the convex portion (320) and the vacancy portion have a gap in a radial direction of the cylindrical battery, with a width of the gap being 0.05 mm-4 mm; and/or
a thickness (H2) of the body portion (310) in the axial direction (X) is 0.03 mm-0.5 mm; and/or
a ratio of a surface area of a side of the body portion (310) facing towards the cell to an area of an end face of the second end (220) is 1 : 2-3 : 2.

4. The cylindrical battery according to claim 1 or 2, **characterized in that** a reference plane is defined parallel to a surface of a side of the body portion (310) facing towards the cell; at least one of an orthographic projection pattern of the body portion (310) and an orthographic projection pattern of the convex portion (320) is circular on the reference plane; and a geometric center of the orthographic projection pattern of the body portion (310) coincides with a geometric center of the convex portion (320).

5. The cylindrical battery according to claim 4, **characterized in that** a width of an end of the convex portion (320) connected to the body portion (310) is greater than a width of an end of the convex portion (320) away from the body portion (310).

6. The cylindrical battery according to claim 1 or 2, **characterized in that** the roll core body (200) comprises a separator; and a ratio of the hardness of the insulating member (300) to the overhang of the separator is 2-110.

7. The cylindrical battery according to claim 6, **characterized in that**
the hardness of the insulating member (300) is 10 HV-100 HV; and/or
the overhang of the separator is 1 mm-4 mm.

8. The cylindrical battery according to claim 1, **characterized in that**
a surface roughness Rz of the insulating member (300) is less than or equal to 0.3; and/or
a thermal conductivity of the insulating member (300) is 0.01 W/(m·k)-5 W/(m·k).

9. The cylindrical battery according to claim 1, **characterized in that** the insulating member (300) is fixedly connected to at least one of the core body and the housing (100).

10. The cylindrical battery according to claim 9, **characterized in that**
a partial region of the convex portion (320) is connected to the roll core body (200) via a first adhesive layer (330); and/or
a surface of a side of the body portion (310) facing away from the cell is connected to the housing (100) via a second adhesive layer (340).

11. The cylindrical battery according to claim 1 or 2, **characterized in that** the insulating member (300) is integrally formed with the housing (100); and a thickness (H2) of the body portion (310) is 0.05 mm-0.5 mm in the axial direction (X).

12. The cylindrical battery according to claim 1, **characterized in that** the cell further comprises an insulating layer (400) disposed on a side of the cell; wherein an edge of the insulating layer (400) adjacent to the second end (220) has a folded edge (410) which covers a portion of an end face of the second end (220).

13. The cylindrical battery according to claim 12, **characterized in that** a reference plane is defined parallel to a surface of a side of the body portion (310) facing towards the cell; and an orthographic projection pattern of the insulating member (300) partially overlaps with an orthographic projection pattern of the insulating layer (400) on the reference plane.

14. The cylindrical battery according to claim 13, **characterized in that** a length of an orthographic pattern overlapping portion of the insulating member (300) and the insulating layer (400) is less than or equal to 15 mm on any straight path on the reference plane parallel to a radial direction of the cylindrical battery.

15. The cylindrical battery according to claim 2, **characterized by** further comprising a liquid injection hole structure disposed on a side of the housing (100) close to the insulating member (300); wherein the convex portion (320) is provided with a through hole (321) penetrating through the insulating member (300) along the axial direction (X); and the passage of the liquid injection hole structure is at least partially overlapped with the through hole (321).

16. The cylindrical battery according to claim 15, **characterized in that** the liquid injection hole structure comprises a protrusion (111) extending towards the cell, the protrusion (111) being at least partially received in the through hole (321); wherein the ratio of a length of the through hole (321) to a height (H3) of the protrusion (111) in the axial direction (X) is 1 : 3-3 : 2.

17. The cylindrical battery according to claim 15, **characterized in that** the convex portion (320) is provided with a shielding portion (322) located at an opening of the through hole (321) at a side close to the cell; and the shielding portion (322) is adapted to divide the opening into at least two through regions.

18. The cylindrical battery according to claim 17, **characterized in that** a reference plane is defined parallel to a surface of a side of the body portion (310) facing towards the cell; and the ratio of an area of an orthographic projection pattern of the shielding portion (322) to a sum of projected areas of all the through regions is 1 : 10-1 : 2 on the reference plane.

19. The cylindrical battery according to claim 1 or 15, **characterized in that** an electrode lead-out portion is disposed on a side of the housing (100) close to the first end; one of the positive pole tab and the negative pole tab is connected to the electrode lead-out portion, and the other is connected to the housing (100);
wherein a side of the housing (100) close to the second end (220) is further provided with a pressure relief portion located on a side opposite to the electrode lead-out portion in the radial direction of the cylindrical battery; and/or
one of the positive pole tab and the negative pole tab is connected to the electrode lead-out portion via a collector member, and the other is connected to the housing (100) via another collector member.

20. A battery device, **characterized by** comprising the cylindrical battery according to any one of claims 1 to 19.

## Patentansprüche

1. Zylindrische Batterie, umfassend ein Gehäuse (100) und eine Zelle, wobei sich die Zelle im Inneren des Gehäuses (100) befindet; die Zelle einen Rollkernkörper (200), eine positive Pollasche und eine negative Pollasche umfasst; der Rollkernkörper (200) erste Enden und zweite Enden (220) aufweist, die in einer axialen Richtung (X) der zylindrischen Batterie einander gegenüberliegen; sich die positive Pollasche und die negative Pollasche beide an dem ersten Ende befinden; **dadurch gekennzeichnet, dass** zwischen dem zweiten Ende (220) und dem Gehäuse (100) ein Isolierelement (300) vorgesehen ist; wobei das Isolierelement (300) einen Körperabschnitt (310) und einen konvexen Abschnitt (320) umfasst, der sich auf einer Seite des Körperabschnitts (310) befindet, die der Zelle zugewandt ist, und sich in Richtung der Zelle erstreckt; das zweite Ende (220) einen Hohlraumabschnitt aufweist; und der konvexe Abschnitt (320) zumindest teilweise in dem Hohlraumabschnitt aufgenommen ist.

2. Zylindrische Batterie nach Anspruch 1, **dadurch gekennzeichnet, dass** der Rollkernkörper (200) ein Rollkernloch (210) aufweist, das in axialer Richtung (X) durchdringt; ein Abschnitt des Rollkernlochs (210) den Hohlraumabschnitt bildet; und der konvexe Abschnitt (320) zumindest teilweise in dem Rollkernloch (210) aufgenommen ist.

3. Zylindrische Batterie nach Anspruch 1 oder 2, **dadurch gekennzeichnet, dass**
eine Höhe (H1) des konvexen Abschnitts (320) in axialer Richtung (X) 0,1 mm bis 3 mm beträgt; und / oder
der konvexe Abschnitt (320) und der Hohlraumabschnitt in einer radialen Richtung der zylindrischen Batterie einen Spalt aufweisen, wobei eine Breite des Spalts 0,05 mm bis 4 mm beträgt; und / oder
eine Dicke (H2) des Körperabschnitts (310) in axialer Richtung (X) 0,03 mm bis 0,5 mm beträgt; und / oder
ein Verhältnis einer Fläche einer der Zelle zugewandten Seite des Körperabschnitts (310) zu einer Fläche einer Stirnfläche des zweiten Endes (220) 1 : 2 bis 3 : 2 beträgt.

4. Zylindrische Batterie nach Anspruch 1 oder 2, **dadurch gekennzeichnet, dass** eine Bezugsebene parallel zu einer Oberfläche einer der Zelle zugewandten Seite des Körperabschnitts (310) definiert ist; mindestens eines von einem orthografischen Projektionsmuster des Körperabschnitts (310) und einem orthografischen Projektionsmuster des konvexen Abschnitts (320) auf der Bezugsebene kreisförmig ist; und ein geometrischer Mittelpunkt des orthografischen Projektionsmusters des Körperabschnitts (310) mit einem geometrischen Mittelpunkt des konvexen Abschnitts (320) zusammenfällt.

5. Zylindrische Batterie nach Anspruch 4, **dadurch gekennzeichnet, dass** eine Breite eines mit dem Körperabschnitt (310) verbundenen Endes des konvexen Abschnitts (320) größer als eine Breite eines von dem Körperabschnitt (310) abgewandten Endes des konvexen Abschnitts (320) ist.

6. Zylindrische Batterie nach Anspruch 1 oder 2, **dadurch gekennzeichnet, dass** der Rollkernkörper (200) einen Separator umfasst; und ein Verhältnis der Härte des Isolierelements (300) zu dem Überstand des Separators 2 bis 110 beträgt.

7. Zylindrische Batterie nach Anspruch 6, **dadurch gekennzeichnet, dass**
die Härte des Isolierelements (300) 10 HV bis 100 HV beträgt; und / oder
der Überstand des Separators 1 mm bis 4 mm beträgt.

8. Zylindrische Batterie nach Anspruch 1, **dadurch gekennzeichnet, dass**
eine Oberflächenrauheit Rz des Isolierelements (300) kleiner oder gleich 0,3 ist; und / oder
eine Wärmeleitfähigkeit des Isolierelements (300) 0,01 W/(m·K) bis 5 W/(m·K) beträgt.

9. Zylindrische Batterie nach Anspruch 1, **dadurch gekennzeichnet, dass** das Isolierelement (300) fest mit mindestens einem von dem Kernkörper und dem Gehäuse (100) verbunden ist.

10. Zylindrische Batterie nach Anspruch 9, **dadurch gekennzeichnet, dass**
eine Teilregion des konvexen Abschnitts (320) über eine erste Haftschicht (330) mit dem Rollkernkörper (200) verbunden ist; und / oder
eine Oberfläche einer von der Zelle abgewandten Seite des Körperabschnitts (310) über eine zweite Haftschicht (340) mit dem Gehäuse (100) verbunden ist.

11. Zylindrische Batterie nach Anspruch 1 oder 2, **dadurch gekennzeichnet, dass** das Isolierelement (300) einstückig mit dem Gehäuse (100) gebildet ist; und eine Dicke (H2) des Körperabschnitts (310) in axialer Richtung (X) 0,05 mm bis 0,5 mm beträgt.

12. Zylindrische Batterie nach Anspruch 1, **dadurch gekennzeichnet, dass** die Zelle ferner eine Isolierschicht (400) umfasst, die auf einer Seite der Zelle angeordnet ist; wobei eine an das zweite Ende (220) angrenzende Kante der Isolierschicht (400) eine umgeschlagene Kante (410) aufweist, die einen Abschnitt einer Stirnfläche des zweiten Endes (220) abdeckt.

13. Zylindrische Batterie nach Anspruch 12, **dadurch gekennzeichnet, dass** eine Bezugsebene parallel zu einer Oberfläche einer Seite des Körperabschnitts (310) definiert ist, die der Zelle zugewandt ist; und sich ein orthografisches Projektionsmuster des Isolierelements (300) teilweise mit einem orthografischen Projektionsmuster der Isolierschicht (400) auf der Bezugsebene überlappt.

14. Zylindrische Batterie nach Anspruch 13, **dadurch gekennzeichnet, dass** eine Länge eines Überlappungsabschnitts des orthografischen Musters des Isolierelements (300) und der Isolierschicht (400) auf jeder geraden Strecke auf der Bezugsebene, die parallel zu einer radialen Richtung der zylindrischen Batterie verläuft, kleiner oder gleich 15 mm beträgt.

15. Zylindrische Batterie nach Anspruch 2, **dadurch gekennzeichnet, dass** sie ferner eine Flüssigkeitseinspritzlochstruktur umfasst, die auf einer Seite des Gehäuses (100) nahe dem Isolierelement (300) angeordnet ist; wobei der konvexe Abschnitt (320) mit einem Durchgangsloch (321) versehen ist, das das Isolierelement (300) entlang der axialen Richtung (X) durchdringt; und sich der Durchgang der Flüssigkeitseinspritzlochstruktur zumindest teilweise mit dem Durchgangsloch (321) überlappt.

16. Zylindrische Batterie nach Anspruch 15, **dadurch gekennzeichnet, dass** die Flüssigkeitseinspritzlochstruktur einen sich in Richtung der Zelle erstreckenden Vorsprung (111) umfasst, wobei der Vorsprung (111) zumindest teilweise in dem Durchgangsloch (321) aufgenommen ist; wobei das Verhältnis einer Länge des Durchgangslochs (321) zu einer Höhe (H3) des Vorsprungs (111) in axialer Richtung (X) 1 : 3 bis 3 : 2 beträgt.

17. Zylindrische Batterie nach Anspruch 15, **dadurch gekennzeichnet, dass** der konvexe Abschnitt (320) mit einem Abschirmabschnitt (322) versehen ist, der sich an einer Öffnung des Durchgangslochs (321) auf einer Seite befindet, die nahe der Zelle ist; und der Abschirmabschnitt (322) so angepasst ist, dass er die Öffnung in mindestens zwei Durchgangsregionen unterteilt.

18. Zylindrische Batterie nach Anspruch 17, **dadurch gekennzeichnet, dass** eine Bezugsebene parallel zu einer Oberfläche einer der Zelle zugewandten Seite des Körperabschnitts (310) definiert ist; und das Verhältnis einer Fläche eines orthografischen Projektionsmusters des Abschirmabschnitts (322) zu einer Summe der projizierten Flächen aller Durchgangsregionen auf der Bezugsebene 1 : 10 bis 1 : 2 beträgt.

19. Zylindrische Batterie nach Anspruch 1 oder 15, **dadurch gekennzeichnet, dass** ein Elektroden-Herausführungsabschnitt auf einer Seite des Gehäuses (100) angeordnet ist, die dem ersten Ende nahe ist; eine von positiver Pollasche und negativer Pollasche mit dem Elektroden-Herausführungsabschnitt verbunden ist und die andere mit dem Gehäuse (100) verbunden ist;
wobei eine Seite des Gehäuses (100), die dem zweiten Ende (220) nahe ist, ferner mit einem Druckentlastungsabschnitt versehen ist, der sich in radialer Richtung der zylindrischen Batterie auf einer dem Elektroden-Herausführungsabschnitt gegenüberliegenden Seite befindet; und / oder
eine von positiver Pollasche und negativer Pollasche über ein Sammelelement mit dem Elektroden-Herausführungsabschnitt verbunden ist und die andere über ein weiteres Sammelelement mit dem Gehäuse (100) verbunden ist.

20. Batterievorrichtung, **dadurch gekennzeichnet, dass** sie die zylindrische Batterie nach einem der Ansprüche 1 bis 19 umfasst.

## Revendications

1. Batterie cylindrique, comprenant un boîtier (100) et une cellule, la cellule étant située à l'intérieur du boîtier (100) ; la cellule comprend un corps de noyau enroulé (200), une languette de pôle positif et une languette de pôle négatif ; le corps de noyau enroulé (200) présente des premières extrémités et des secondes extrémités (220) qui sont opposées dans une direction axiale (X) de la batterie cylindrique ; la languette de pôle positif et la languette de pôle négatif sont toutes deux situées au niveau de la première extrémité ; **caractérisée en ce qu'**un élément isolant (300) est prévu entre la deuxième extrémité (220) et le boîtier (100) ; dans lequel l'élément isolant (300) comprend une partie de corps (310) et une partie convexe (320) qui est située sur un côté de la partie de corps (310) tourné vers la cellule et s'étend vers la cellule ; la deuxième extrémité (220) présente une partie évidée ; et la partie convexe (320) est au moins partiellement logée dans la partie évidée.

2. Batterie cylindrique selon la revendication 1, **caractérisée en ce que** le corps de noyau enroulé (200) comporte un trou du noyau enroulé (210) traversant dans la direction axiale (X) ; une partie du trou de noyau de rouleau (210) forme la partie évidée ; et la partie convexe (320) est au moins partiellement logée dans le trou de noyau de rouleau (210).

3. Batterie cylindrique selon la revendication 1 ou 2, **caractérisée en ce que** une hauteur (H1) de la partie convexe (320) dans la direction axiale (X) est comprise entre 0,1 mm et 3 mm ; et/ou
la partie convexe (320) et la partie évidée présentent un espace dans la direction radiale de
la batterie cylindrique, la largeur de cet espace étant comprise entre 0,05 mm et 4 mm ; et/ou
l'épaisseur (H2) de la partie de corps (310) dans la direction axiale (X) est comprise entre 0,03 mm et 0,5 mm ; et/ou
le rapport entre la surface d'un côté de la partie de corps (310) tournée vers la cellule et la surface d'une face d'extrémité de la deuxième extrémité (220) est compris entre 1 : 2 et 3 : 2.

4. Batterie cylindrique selon la revendication 1 ou 2, **caractérisée en ce qu'**un plan de référence est défini parallèlement à une surface d'un côté de la partie de corps (310) tournée vers la cellule ; au moins l'un parmi un motif de projection orthographique de la partie de corps (310) et un motif de projection orthographique de la partie convexe (320) est circulaire sur le plan de référence ; et un centre géométrique du motif de projection orthographique de la partie de corps (310) coïncide avec un centre géométrique de la partie convexe (320).

5. Batterie cylindrique selon la revendication 4, **caractérisée en ce que** la largeur d'une extrémité de la partie convexe (320) reliée à la partie de corps (310) est supérieure à la largeur d'une extrémité de la partie convexe (320) éloignée de la partie de corps (310).

6. Batterie cylindrique selon la revendication 1 ou 2, **caractérisée en ce que** le corps de noyau enroulé (200) comprend un séparateur ; et **en ce que** le rapport entre la dureté de l'élément isolant (300) et le débord du séparateur est compris entre 2 et 110.

7. Batterie cylindrique selon la revendication 6, **caractérisée en ce que** la dureté de l'élément isolant (300) est comprise entre 10 HV et 100 HV ; et/ou le débord du séparateur est compris entre 1 mm et 4 mm.

8. Batterie cylindrique selon la revendication 1, **caractérisée en ce que** la rugosité de surface Rz de l'élément isolant (300) est inférieure ou égale à 0,3 ; et/ou la conductivité thermique de l'élément isolant (300) est comprise entre 0,01 W/(m·K) et 5 W/(m·K).

9. Batterie cylindrique selon la revendication 1, **caractérisée en ce que** l'élément isolant (300) est relié de manière fixe à au moins l'un parmi le corps central et le boîtier (100).

10. Batterie cylindrique selon la revendication 9, **caractérisée en ce que** une région partielle de la partie convexe (320) est reliée au corps de noyau enroulé (200) par l'intermédiaire d'une première couche adhésive (330) ; et/ou
une surface d'un côté de la partie de corps (310) opposée à la cellule est reliée au boîtier (100) par l'intermédiaire d'une deuxième couche adhésive (340).

11. Batterie cylindrique selon la revendication 1 ou 2, **caractérisée en ce que** l'élément isolant (300) est formé d'un seul tenant avec le boîtier (100) ; et **en ce qu'**une épaisseur (H2) de la partie de corps (310) est comprise entre 0,05 mm et 0,5 mm dans la direction axiale (X).

12. Batterie cylindrique selon la revendication 1, **caractérisée en ce que** la cellule comprend en outre une couche isolante (400) disposée sur un côté de la cellule ; dans laquelle un bord de la couche isolante (400) adjacent à la deuxième extrémité (220) présente un bord replié (410) qui recouvre une partie d'une face d'extrémité de la deuxième extrémité (220).

13. Batterie cylindrique selon la revendication 12, **caractérisée en ce qu'**un plan de référence est défini parallèlement à une surface d'un côté de la partie de corps (310) tournée vers la cellule ; et **en ce qu'**un motif de projection orthographique de l'élément isolant (300) chevauche partiellement un motif de projection orthographique de la couche isolante (400) sur le plan de référence.

14. Batterie cylindrique selon la revendication 13, **caractérisée en ce que** la longueur d'une partie de chevauchement des projection orthographiques de l'élément isolant (300) et de la couche isolante (400) est inférieure ou égale à 15 mm sur tout trajet rectiligne sur le plan de référence parallèle à une direction radiale de la batterie cylindrique.

15. Batterie cylindrique selon la revendication 2, **caractérisée en ce qu'**elle comprend en outre une structure de trou d'injection de liquide disposée sur un côté du boîtier (100) proche de l'élément isolant (300) ; dans laquelle la partie convexe (320) est pourvue d'un trou traversant (321) pénétrant à travers l'élément isolant (300) le long de la direction axiale (X) ; et le passage de la structure d'orifice d'injection de liquide se superpose au moins partiellement au trou traversant (321).

16. Batterie cylindrique selon la revendication 15, **caractérisée en ce que** la structure d'orifice d'injection de liquide comprend une saillie (111) s'étendant vers la cellule, la saillie (111) étant au moins partiellement logée dans le trou traversant (321) ; le rapport entre la longueur du trou traversant (321) et la hauteur (H3) de la saillie (111) dans la direction axiale (X) étant compris entre 1 : 3 et 3 : 2.

17. Batterie cylindrique selon la revendication 15, **caractérisée en ce que** la partie convexe (320) est pourvue d'une partie de protection (322) située au niveau d'une ouverture du trou traversant (321) sur un côté proche de la cellule ; et la partie de protection (322) est adaptée pour diviser l'ouverture en au moins deux zones de passage.

18. Batterie cylindrique selon la revendication 17, **caractérisée en ce qu'**un plan de référence est défini parallèlement à une surface d'un côté de la partie de corps (310) tournée vers la cellule ; et le rapport entre la surface d'une projection orthographique de la partie de protection (322) et la somme des surfaces projetées de toutes les zones de passage est compris entre 1:10 et 1:2 sur le plan de référence.

19. Batterie cylindrique selon la revendication 1 ou 15, **caractérisée en ce qu'**une partie de sortie d'électrode est disposée sur un côté du boîtier (100) proche de la première extrémité ; l'une des languettes de pôle positif et de pôle négatif est reliée à la partie de sortie d'électrode, et l'autre est reliée au boîtier (100) ;
dans laquelle un côté du boîtier (100) proche de la deuxième extrémité (220) est en outre muni d'une partie de décompression située sur un côté opposé à la partie de sortie d'électrode dans la direction radiale de la batterie cylindrique ; et/ou
l'une des languettes de pôle positif et de pôle négatif est reliée à la partie de sortie d'électrode via un élément collecteur, et l'autre est reliée au boîtier (100) via un autre élément collecteur.

20. Dispositif de batterie, **caractérisé en ce qu'**il comprend la batterie cylindrique selon l'une quelconque des revendications 1 à 19.
